**Europäisches Patentamt**

**European Patent Office**

**Office européen des brevets**

(11) Veröffentlichungsnummer: **0 479 281 A1**

## (12) EUROPÄISCHE PATENTANMELDUNG

(21) Anmeldenummer: **91116853.2**

(22) Anmeldetag: **02.10.91**

(51) Int. Cl.5: **B65G 47/64**, B21D 11/12

(30) Priorität: **04.10.90 DE 9013845 U**

(43) Veröffentlichungstag der Anmeldung:
**08.04.92 Patentblatt 92/15**

(84) Benannte Vertragsstaaten:
**AT BE CH DE DK ES FR GB GR IT LI LU NL SE**

(71) Anmelder: **Ruhl, Heinz**
**Manigoldstrasse 5**
**W-8703 Ochsenfurt(DE)**

(72) Erfinder: **Ruhl, Heinz**
**Manigoldstrasse 5**
**W-8703 Ochsenfurt(DE)**

(74) Vertreter: **Stoffregen, Hans-Herbert, Dr.**
**Dipl.-Phys.**
**Patentanwalt, Salzstrasse 11 a, Postfach 21**
**44**
**W-6450 Hanau (Main) 1(DE)**

(54) **Anordnung zum Biegen von stabförmigen Materialien.**

(57) Es wird eine Anordnung zum Biegen von stabförmigen Materialien (14, 16) wie von einem Coil abgewickeltes und gerichtetes draht- oder bandför-miges Material mit zumindest einer Biegevorrichtung (10, 12) vorgeschlagen, von der das gebogene Mate-rial über eine Übergabeeinrichtung (18, 20) einer Fördervorrichtung (26) zugeführt wird. Diese weist einen derart verschwenkbaren Abschnitt auf, daß dessen Förderrichtung (30, 32) wahlweise parallel oder in etwa parallel zu der Biegevorrichtung (10, 12) verläuft oder mit der Hauptförderrichtung (28) der Fördervorrichtung zusammenfällt.

FIG.1

Die Erfindung bezieht sich auf eine Anordnung zum Biegen von stabförmigen Materialien, wie von einem Coil abgewickeltes und gerichtetes Draht- oder Bandförmiges Material, umfassend eine Biegevorrichtung, eine das gebogene Material aufnehmende bzw. ablegende Übergabeeinrichtung, sowie eine eine unter einem Winkel zur Zuführrichtung des stabförmigen Materials zu der Biegevorrichtung verlaufende Hauptförderrichtung aufweisende Fördervorrichtung für das gebogene Material.

Bei den bekannten Biegeanordnungen wird das gebogenen Material einer Fördervorrichtung übergeben. Dies geschieht grundsätzlich manuell, wobei das die Biegevorrichtung bedienende Personal das gebogene Material auf eine Fördervorrichtung auflegt, die an mehreren Biegevorrichtungen vorbeiführt. Dieses Übergeben des gebogenen Materials ist nicht nur personalaufwendig, sondern birgt auch die Gefahr in sich, daß das Material nicht so auf den Förderer gelegt ist, daß ein reibungsloser Transport über die gesamte Förderstrecke erfolgt. Vielmehr kann das gebogenen Material seitlich über die Fördervorrichtung vorstehen, so daß bei Hindernissen ein Hängenbleiben möglich ist.

Aufgabe der vorliegenden Erfindung ist es, eine Anordnung der zuvor beschriebenen Art so weiterzubilden, daß ein problemloses Übergeben des gebogenen Materials an die Fördervorrichtung erfolgt. Dabei soll sichergestellt sein, daß das abgelegte Material im erforderlichen Umfang ausgerichtet auf die Fördervorrichtung gelangt. Ferner soll ein problemloses Übergeben des gebogenen Material von der Biegevorrichtung auf die Fördervorrichtung selbst möglich sein.

Die Aufgabe wird erfindungsgemäß im wesentlichen dadurch gelöst, daß ein Abschnitt der Fördervorrichtung derart verschwenkbar ausgebildet ist, daß dessen Förderrichtung wahlweise parallel oder in etwa parallel zu der Biegevorrichtung verläuft oder mit der Hauptförderrichtung der Fördervorrichtung zusammenfällt. Gegebenenfalls kann der Abschnitt auch eine gesonderte Fördereinrichtung sein, welches auf die biegeanordnung bzw. Fördervorrichtung im erforderlichen Umfang ausrichtbar ist.

Erfindungsgemäß wird folglich ein Abschnitt der Fördervorrichtung verschwenkbar ausgebildet, um unmittelbar neben der Biegevorrichtung zu verlaufen. Hierdurch ist ein problemloses Übergeben des gebogenen Materials auf den Abschnitt der Fördervorrichtung möglich. Dieses Übergeben kann von Hand oder gegebenenfalls automatisch erfolgen. Auf jeden Fall ist durch die kurze Entfernung zwischen der Biegevorrichtung und dem Abschnitt der Fördervorrichtung gewährleistet, daß das gebogene Material schnell und ausgerichtet ablegbar ist, so daß nach dem Verschwenken des Abschnittes ein einwandfreier Weitertransport über die Fördervorrichtung entlag deren Hauptförderrichtung möglich ist.

Bei der Fördervorrichtung selbst handelt es sich vorzugsweise um einen Tragförderer wie z. B. einen Plattenförderer. Der verschwenkbare Abschnitt kann dabei gleichfalls ein Plattenförderer sein. Dies ist jedoch kein zwingendes Merkmal. Gegebenenfalls kann der verschwenkbare Abschnitt z. B. auch ein Transportbandabschnitt sein.

In weiterer Ausgestaltung der Erfindung ist vorgesehen, daß das gebogene Material auf den verschwenkbar ausgebildeten Abschnitt der Fördervorrichtung über die Übergabeeinrichtung ablegbar ist, die das gebogene Material haltende Abschnitte umfaßt, die ihrerseits in Längsrichtung des gebogenen Materials betrachtet seitlich wegführbar ausgebildet sind. Mit anderen Worten nehmen Abschnitte der Übergabeeinrichtung das gebogene Material auf, um zum Übergeben des gebogenen Materials auf den verschwenkbaren Abschnitt derart auseinandergefahren zu werden, daß das gebogenen Material ausgerichtet auf den Abschnitt ablegbar ist.

Durch diese automatische Übergabe können problemlos mehrere gebogene Materialien übereinander angeordnet auf den Abschnitt der Fördervorrichtung abgelegt werden, um anschließend nach dem Verschwenken des Abschnittes über die Fördervorrichtung einer weiteren Bearbeitungsstation oder einem Lager zugeführt zu werden.

Die das Material haltenden und auf den Abschnitt der Fördervorrichtung übergebenden Abschnitte der Übergabeeinrichtung sind vorzugsweise flächig ausgebildet, und zwar insbesondere in ihren äußeren Endbereichen. Hierdurch ist gewährleistet, daß das von der Übergabeeinrichtung zu übergebende gebogene Material aufgrund dessen flächiger Auflage auf den Aufnahmeabschnitten in einer stabilen Position verharrt.

In weiterer Ausgestaltung kann die Übergabeeinrichtung bzw. deren das gebogene Material aufnehmenden Abschnitte um eine in etwa parallel zur Förderrichtung des Abschnittes der Fördervorrichtung verlaufenden Achse verschwenkbar ausgebildet sein, wodurch die Übergabe des gebogenen Materials noch kontrollierter erfolgt.

Die erfindungsgemäße Anordnung zum Biegen von stabförimigen Materialien ist insbesondere für Biegestraßen geeignet, also Anordnungen, bei denen eine Vielzahl von Biegevorrichtungen parallel zueinander ausgerichtet sind, um von diesen einer gemeinsamen, vorzugsweise senkrecht zu den Biegevorrichtungen bzw. durch diese vorgegebenen Biegeebenen verlaufenden Fördervorrichtung übergeben zu werden.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:

Fig. 1: einen Ausschnitt aus einer Anordnung zum Biegen von stabförmigen Materialien und

Fig. 2: eine Prinzipdarstellung einer Biegevorrichtung mit Übergabeeinrichtung für gebogenes Material.

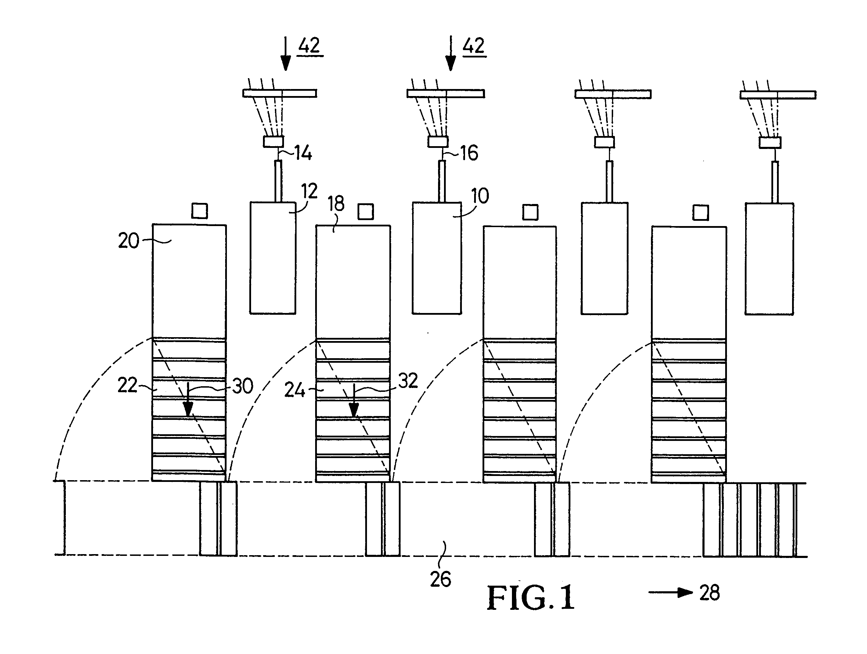

In Fig. 1 ist ein Ausschnitt einer Biegestraße dargestellt, die eine Vielzahl von vorzugsweise parallel zueinander verlaufenden Biegevorrichtungen (10), (12) umfaßt. Bei den Biegevorrichtungen (10), (12) handelt es sich um Biegemaschinen bekannter Konstruktion, um vorzugsweise von Coils abgewikkeltes draht- oder bandförmiges Material (14) bzw. (16) zu z. B. Betonbewehrungsstählen zu biegen. Dabei wird das von den Coils abgewickelte Material mittels nicht dargestellter Richtwerkzeuge gerichtet.

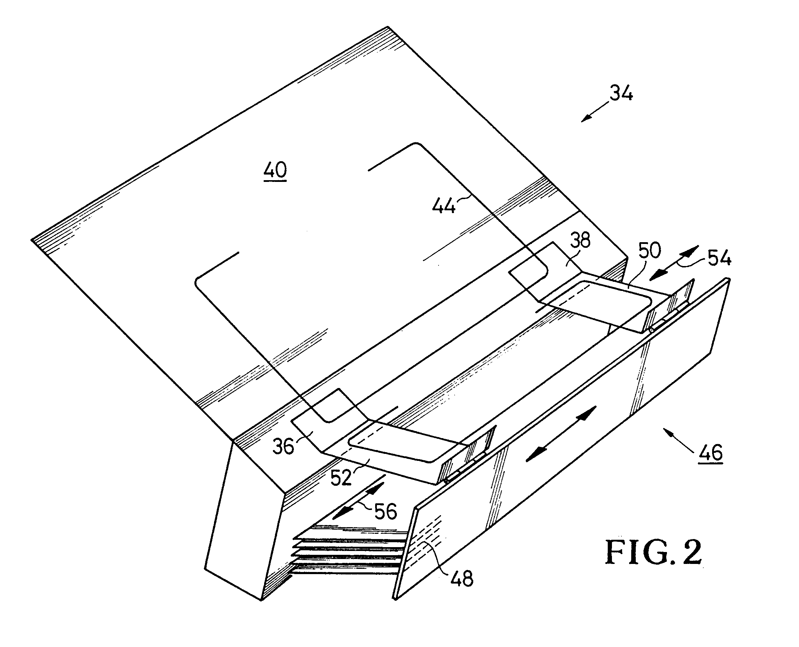

Von den Biegevorrichtungen (10) und (12) gelangt das gebogene Material über anhand der Fig. 2 näher beschriebene Übergabeeinrichtungen (18) und (20) auf einen Abschnitt (22) bzw. (24) einer Fördervorrichtung (26). Die Fördervorrichtung (26), bei der es sich vorzugsweise um einen Tragförderer wie Plattenförderer handelt, weist eine Hauptförderrichtung (28) auf. Entlang des Plattenförderers (26) sollen sämtliche von den Biegevorrichtungen (10) und (12) gebogenen Materialien zum Beispiel zu einem Lager transportiert werden.

Die Abschnitte (22) und (24) der Fördervorrichtung (26) sind Tragförderer und verschwenkbar ausgebildet. Dies bedeutet, daß die Abschnitte (22) und (24) wahlweise parallel oder in etwa parallel zu den Biegevorrichtungen (10) und (12) ausgerichtet oder derart in die Fördervorrichtung (26) bewegt werden, daß die Förderrichtungen (30) und (32) der Abschnitte (22) und (24) mit der Hauptförderrichtung (28) zusammenfallen.

Durch diese Maßnahmen ist gewährleistet, daß das auf die Abschnitte (22) und (24) abgelegte gebogenen Material auch ausgerichtet auf die Fördervorrichtung (26) gelangt, so daß ein problemloser Weitertransport möglich ist.

Selbstverständlich sollte eine Synchronisierung des Verschwenkens der Abschnitte (22) und (24) erfolgen, damit anschließend ein reibungsloser Transport über den Hauptförderer (26) erfolgt.

Gegebenenfalls besteht auch die Möglichkeit, daß die Abschnitte (22) und (24) selbst Bestandteile des Hauptförderers (26) sind, sondern oberhalb von diesem verlaufen. In diesem Fall muß das gebogene Material den Niveauunterschied zwischen den Transportebenen von den Abschnitten (22) bzw. (24) und dem Hauptförderer (26) überwinden. Dies kann dadurch erleichtert werden, daß die Abschnitte (22) und (24) zur Transportebene des Hauptförderers (26) hin geneigt verlaufen. Die Abschnitte (22) und (24) können selbst angetrieben sein oder von dem Hauptförderer angetrieben werden.

Durch die Verwendung eines Tragförderers als Fördervorrichtung (26) ist des weiteren der Vorteil gegeben, daß das gebogene Material entlang des Transportweges mit unterschiedlicher Geschwindigkeit gefördert werden kann. Insbesondere bei der Übergabe von den Abschnitten (22) und (24) auf die Fördervorrichtung (26) kann eine geringe Geschwindigkeit gewählt werden. Hierdurch ist gewährleistet, daß ein Verrutschen der abgelegten gebogenen Materialien unterbleibt.

In Fig. 2 ist rein prinzipiell ein Biegevorrichtung (34) dargestellt, die bekannter Konstruktion sein kann. So besteht die Möglichkeit, das Material mittels zweier Biegestöcke (36) und (38) im gewünschten Umfang zu verbiegen.

Durch die Biegevorrichtung (34) wird eine Biegeebene (40) vorgegeben, die parallel zu der Längsachse der Biegevorrichtung (34) verläuft und mit der Zuführrichtung (42) des gerichteten, jedoch noch nicht gebogenen Materials zusammenfällt. Nachdem das Material (44) im gewünschten Umfang gebogen ist, wird dieses über eine Übergabeeinrichtung (46) abgelegt, um anschließend dem Abschnitt (22) bzw. (24) übergeben zu werden. Dabei kann der Abschnitt (22) bzw. (24) auch unterhalb der Übergabeeinrichtung (46) verlaufen.

Wie die Fig. 2 verdeutlicht, wird gebogenes Material (48) auf die Abschnitte (22) und (24) übergeben bzw. auf diesen abgelegt. Um ein gerichtets Stapeln zu ermöglichen, weist die Übergabeeinrichtung (46) zwei verschiebbar ausgebildete flächige Abschnitte (50) und (52) auf, die die Endabschnitte des gebogenen Materials (48) erfassen. Sobald das gebogene Material auf den Abschnitten (50) und (52) aufliegt, werden diese auseinandergefahren (Pfeile (54) und (56), so daß das gebogenen Material (48) senkrecht herunterfallen kann. Dann werden die Abschnitte (48) und (50) wieder aufeinanderzubewegt, um erneut gebogenes Material aufnehmen und anschließend auf die bereits abgelegten gebogenen Materialien (48) stapeln zu können.

Um ein Übergeben ermöglichen zu können, kann die Übergabeeinrichtung (46), also die flächigen Abschnitte (50) und (52) um eine Achse verschwenkbar sein, die in etwa parallel zu der Förderrichtung (30) bzw. (32) des Abschnittes (22) bzw. (24) der Fördervorrichtung (26) in zu der Biegevorrichtung (34) ausgerichteter Position verläuft.

**Patentansprüche**

1. Anordnung zum Biegen von stabförmigen Materialien (14, 16) wie von einem Coil abgewikkeltes und gerichtetes draht- oder bandförmiges Material umfassend zumindest eine Biegevorrichtung (10, 12), eine das gebogene Material aufnehmende bzw. ablegende Übergabeeinrichtung (18, 20) sowie eine eine unter einem Winkel zur Zuführrichtung des stabförmigen Materials zu der Biegevorrichtung verlaufende Hauptförderrichtung (28) aufweisende Fördervorrichtung (26) für das gebogenen Material,
**dadurch gekennzeichnet**,
daß ein Abschnitt (22, 24) der Fördervorrichtung (26) derart verschwenkbar ausgebildet oder zu dieser ausrichtbar ist, daß dessen Förderrichtung (30, 32) wahlweise parallel oder in etwa parallel zu der Biegevorrichtung (10, 12) verläuft oder mit der Hauptförderrichtung (28) der Fördervorrichtung zusammenfällt.

2.  Anordnung nach Anspruch 1,
    **dadurch gekennzeichnet**,
    daß die Fördervorrichtung (26) ein Tragförderer ist.

3.  Anordnung nach Anspruch 2,
    **dadurch gekennzeichnet**,
    daß der Tragförderer ein Plattenförderer (26) ist.

4.  Anordnung nach Anspruch 1,
    **dadurch gekennzeichnet**,
    daß das gebogene Material (48) auf den Abschnitt (22, 24) über die Übergabeeinrichtung (46) ablegbar ist, die das gebogene Material haltende Abschnitte (48, 50) umfaßt, die in Längsrichtung des gebogenen Materials (48) betrachtet seitlich wegführbar ausgebildet sind.

5.  Anordnung nach Anspruch 4,
    **dadurch gekennzeichnet**,
    daß die Abschnitte (48, 50) der Übergabeeinrichtung (46) flächig ausgebildet sind.

6.  Anordnung nach zumindest Anspruch 4,
    **dadurch gekennzeichnet**,
    daß die Übergabeeinrichtung (46) bzw. deren dasgebogene Material (48) haltenden Abschnitte (50, 52) um eine in etwa parallel zur Förderrichtung (30, 32) der Abschnitte (22, 24) verlaufende Achse verschwenkbar ist bzw. sind.

7.  Anordnung nach zumindest Anspruch 1,
    **dadurch gekennzeichnet**,
    daß die Anordnung mehrere im wesentlichen parallel zueinander verlaufende Biegevorrichtungen (10, 12) umfaßt, deren Längsrichtungen im wesentlichen senkrecht zu einer das gebogenen Material insgesamt transportierenden Fördervorrichtung (26) verlaufen.

8.  Anordnung nach zumindest Anspruch 1,
    **dadurch gekennzeichnet**,
    daß die Transportebene des Abschnitts (22, 24) oberhalb der Transportebene der Fördervorrichtung (26) verläuft.

9.  Anordnung nach Anspruch 8,
    **dadurch gekennzeichnet**,
    daß die Transportebene des Abschnitts (22, 24) zur Transportebene der Fördervorrichtung (26) geneigt verläuft.

FIG.1

EP 0 479 281 A1

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X | DE-U-9 013 845 (RUHL)<br>* das ganze Dokument * * | 1-9 | B 65 G 47/64<br>B 21 D 11/12 |
| A | EP-A-0 333 695 (EVG)<br>* Abbildungen * * | 1 | |
| A | AT-A-368 725 (EVG)<br>* Abbildungen * * | 1 | |
| A | DE-A-3 830 194 (PROTECH AUTOMATION)<br>* Abbildungen * * | 1,2 | |
| A | DE-A-1 756 439 (KETTNER)<br>* Abbildungen * * | 1 | |

| RECHERCHIERTE SACHGEBIETE (Int. Cl.5) |
|---|
| B 65 G<br>B 21 D |

Der vorliegende Recherchenbericht wurde für alle Patentansprüche erstellt

| Recherchenort | Abschlußdatum der Recherche | Prüfer |
|---|---|---|
| Den Haag | 08 Januar 92 | OSTYN T.J.M. |